# EUROPEAN PATENT APPLICATION

(11) **EP 2 452 743 A1**
(43) Date of publication of application: **16.05.2012**
(21) Application number: 10191007.3
(22) Date of filing: 12.11.2010
(51) Int. Cl.: B01J 19/00, B01J 19/24

(54) **Reactor for carrying out chemical reactions**

(71) Applicant: Lonza AG, 4052 Basel (CH)
(72) Inventor: Roberge, Dominique, 3960 Sierre (CH); Kockmann, Norbert, 3930 Visp (CH); Gottsporner, Michael, 3932 Visperterminen (CH)
(74) Representative: Winter, Brandl, Fürniss, Hübner, Röss, Kaiser, Polte - Partnerschaft

(57) **Abstract**

A Reactor for carrying out chemical reactions to take place in at least one process fluid continuously flowing within said reactor between an inflow side and an outflow side thereof, is characterized by comprising at least one module as a smallest replaceable function unit that is integrally composed of (a) a process portion having confined therein one or more process fluid channels of a process fluid channel system, and (b) a heat exchange portion, wherein one or more heat exchange fluid channels of a heat exchange fluid channel system are fluid-tightly formed by opposite contact surfaces of said process portion and said heat exchange portion.

## Description

The present invention refers a reactor for carrying out chemical reactions to take place in at least one process fluid (to be defined below). The present invention specifically but not exclusively refers to micro- and mini-reactors (to be defined below).

In continuous-reaction technology, generally speaking, a reactor is continuously passed through by various chemical substances including a plurality of educts flowing into the reactor and reacting therein, perhaps via one or more intermediate products, to form at least one product flowing out of the reactor. The chemical substances - educts, products, and intermediate products, solvents, by-products, salts etc. - are guided in respective channels or channel systems formed in the reactor whose critical flow cross sections and internal structures determine the specification of the reactor as a micro-reactor or as a mini-reactor (critical flow cross sections in the micrometer or millimeter range, respectively). Specifically, in a mini-reactor, the height of the channels is between about 0,5 mm and about 2,5 mm, the height/width-ratio is between 1:4 and 1:50, favourably between 1:4 and 1:30, and most advantageously between 1:5 and 1:25, wherein the width has a maximum of about 40 mm. Micro-reactors are reactors that are smaller than mini-reactors. Especially, the channel heights are between about 1 µm and about 500 µm. It should be noted, however, that even in a mini-reactor there may be channels, especially within a mixing section thereof, where the crucial dimension is in the µm-range of a micro-reactor. The scales given above mainly refer to the retention section of the process portion.

A micro-reactor of the above described type is disclosed, for example, in EP 1 839 739 A1 of the same applicant whose teaching is enclosed herein in its entirety and forms the closest prior art of the present application. Further documents helpful in understanding the present invention are: EP-A-0688242, EP-A-1031375, WO-A-2004/045761 and USA-2004/0109798.

The micro-reactor described in EP 1 839 739 A1 comprises a stack of relatively thin heat exchange and process plates held together by a frame, wherein each plate is individually replaceable. This concept has a high degree of modularity; it requires, however, care in the process of assembly, repair or replacement in order not to damage the plates (in EP 1 839 739 A1, each plate is a module).

It is, therefore, an object of the present invention to provide a reactor that allows a robust handling and is less prone to damage.

The object is solved by the features of claim 1. Preferred aspects are defined in the depending claims.

According to the present invention (claim 1), a reactor for carrying out chemical reactions to take place in at least one process fluid continuously flowing within said reactor between an inflow side and an outflow side thereof is characterized by comprising at least one module as a smallest replaceable function unit that is integrally composed of (a) a process portion having confined therein one or more process fluid channels of a process fluid channel system, and (b) a heat exchange portion, wherein one or more heat exchange fluid channels of a heat exchange fluid channel system are fluid-tightly formed by opposite contact surfaces of the process portion and the heat exchange portion. The term "process fluid" is to be construed generally, and refers to all fluids flowing "within" the process portion. The process fluid may itself be or just include and carry a chemical substance or chemical substances that participate(s) in the chemical reactions. Furthermore, the process fluid as a well-defined fluid - due to the chemical reactions taking place in the reactor - does, strictly speaking, not flow "through" the reactor, but is being subject to various changes. The term "module" is defined in claim 1 of the present invention as the smallest replaceable function unit that is integrally composed of a process portion and a heat exchange portion. That is, the inventive module can not be non-destructively disassembled into the process and heat exchange portions it is comprised of. This is in contrast to EP 1 839 739 A1 where each individual heat exchange and reaction plate is a module, as stated above. Denoting EP 1 839 739 A1 by an index "1" and the present invention by an index "2", this circumstance can be shortly written as: module2 = [(process plate)1 + (heat exchange plate)1], where the notation "[ ]" means that these parts are "integrally composed" after having been permanently connected during manufacture. Said permanent connection may be achieved by any known technique like soldering, welding, glueing etc. The notation that one or more process fluid channels of a process fluid channel system are "confined" in the process portion means that the walls of channels of the process fluid channel system within the process portion are constituted only by the process portion itself. To put it differently, the channels of the process fluid channel system are completely embedded in the material of the process portion. In contrast, the notation that one or more heat exchange fluid channels of a heat exchange fluid channel system are fluid-tightly formed by opposite contact surfaces of the process portion and the heat exchange portion means that the walls of the channels of the heat exchange fluid channel system are partly constituted by the heat exchange module and partly constituted by the process portion, where the contact surfaces in contact with the heat exchange fluid may be plain, but advantageously are structured for better heat transfer. In other words, each cross-section of each of the channels of the process portion is a closed loop arranged completely within the process portion, whereas each cross-section of each of the channels formed by opposite contact surfaces of the process portion and the heat exchange portion consists of two loop parts forming together a closed loop that extends into the process portion and/or the heat exchange portion. Preferably but not necessarily, the cross-sections of the process fluid channel(s) and the heat exchange channel(s) are rectangular. This means that, according to the present invention, a compact structure of the modules as the smallest replaceable function units, and an optimum heat transfer from the heat exchange fluid to the process fluid is achieved in that the heat exchange fluid is guided within the heat exchange fluid channels in direct contact and along with the process portion. Specifically, as stated above, the shape of the closed loop is arbitrary, in principle, and the parts of the cross-section formed by the process portion and heat exchange portion, respectively, may be different in size. Preferably, the contact surface of the process portion is a plane surface (claim 2), i. e. the heat exchange fluid channel is entirely formed within the heat exchange portion, and is exposed or open towards the process portion, whose contact surface forms a plane wall of the heat exchange channel. Finally, the attribute "function" in "function unit" is to exclude elements other than the above described modules from the consideration, such as the frame means known from EP 1 839 739 A1, connections, ports etc. A "function unit" may be a "reaction unit" in the process portion of which chemical reactions take place, or a "retention unit" for providing in its process portion a required residence time for the process fluid. It should be noted that the process portion is composed of two plates to be able to manufactue the process fluid channel system, and the two plates are permanently fixed together by soldering, welding or any other suitable joining technology, whereas the heat exchange portions may be non-permanently (by clamping, pressing or thelike) or permanently (by soldering, for example) fixed to the process portion.

Therefore, compared to the modular micro-reactor disclosed in EP 1 839 739 A1, the reactor according to the present invention, having functionally more complex and, therefore, constructively larger modules, is "less modular". This disadvantage is compensated, however, by a gain in stability and rigidity, reducing the danger of torsion, bending and related tightness problems. The larger thickness of each module has the further advantage that inlet and outlet ports for the process fluids can be made larger. This is important because the smallest cross section of the connections of the micro-reactor disclosed in EP 1 839 739 A1 results in some increase of the flow resistance which thus increases the internal pressure loss. It goes without saying that in order to optimize heat transfer between the heat exchange portion and process portion, the contact regions between both should be as large as possible, advantageously identically sized surface areas. It should be noted that the phrase "smallest replaceable" is to be understood functionally: The reactor may comprise a plurality of function units which need not to be of the same size. Each of which, however, is not further dividable into smaller parts without destroying it.

According to a preferred aspect of the present invention (claim 3), the heat exchange portion comprises either a single heat exchange member connected to a heat exchange surface of the process portion, or a first heat exchange member connected to a first heat exchange surface of the process portion, and a second heat exchange member connected to a second heat exchange surface of the process portion. Theoretically, the larger the number of members, which, as a matter of course, should be in a technically reasonable range, the more complex a temperature profile can be established. For instance, it may be necessary to have regions of the process fluid channel system of different temperature, a cooling-heating-sequence within a single process portion, or the like.

According to a preferred aspect of the present invention (claim 4), where two heat exchange members are present, the first heat exchange member and the second heat exchange member are each generally plate shaped, and the first and second heat exchange surfaces of said process portion are opposite surfaces of said process portion. The term "plate" here expediently refers (a) to a body having essentially parallel opposite maximum surfaces to form a flat cuboid, so to speak, where parallelism implies that each of the opposite surfaces is a plane surface. This in turn implies that the first and second heat exchange surfaces of the process plate equally are plane surfaces each that are - preferably - also parallel to each other. Consequently, the module formed by connecting the two generally plate shaped members and the process portion itself is a cuboid. The term "plate" here alternatively means that (b) the opposite surfaces thereof form an angle therebetween resulting in a slightly V-form shape. Advantageously, the process plate in such a case is complementarily formed in order to again get a cuboid shape for the module. The attribute "generally" in "generally plate shaped" shall include small variations like L-shaped heat exchange members. In such a case, the two heat exchange members can be arranged mirror-inverted to together form a "U" in cross-section within which the process portion is accommodated. In case of a one-piece heat exchange portion being formed of a single heat exchange member, the latter may also be L-shaped or [-shaped. In such a case, the process plate may complement the heat exchange member resulting again in a cuboid shape adapted to be easily framed.

According to a preferred aspect of the present invention (claim 5), the reactor comprises a plurality of plate shaped modules fluid-tightly held together to form a stack by a frame, wherein each of the plurality of plate shaped modules is provided with at least one fastener to be detachably mountable to the frame. The fasteners may be any means to removably attach the individual modules to the frame, which are, for example, hooks, bars, brackets, claws etc. Therefore, the at least one process fluid and/or the heat exchange fluid is flowing either (a) at least partly or (b) completely within said reactor. In case of (a), the individual modules are at least partly connected externally, whereas in case of (b) all fluid flows are exclusively guided internally (claim 7). In case of (b), furthermore, each of the plurality of plate shaped modules has outlet and inlet ports forming ends of its heat exchange fluid channel system, and outlet-inlet-connections of two subsequent modules advantageously comprise seals whose leak tightness is assured by the pressing force exerted by a clamping means (claim 7). It should be emphasized, however, that even in a case where all modules are exclusively externally connected and there is no need for the modules to be pressed together for reasons of leak tightness, the modules can advantageously be pressed together by the clamping means in order to enhance stability of the reactor. Advantageously, the modules comprise adjustment and/or arrestment means cooperating with appropriate counter pieces or matching parts of the frame (especially the tie-rods thereof) when mounted thereon. Examples of such adjustment and/or arrestment means are pin-and-hole, slot-and-key, and tongue-and-groove connections. The adjustment and/or arrestment means prevent the modules from becoming displaced when one of them is removed to be exchanged for some reason or other. As a matter of course and a consequence of the modular concept of the present invention, the types of modules forming the stack can be arbitrarily combined and assembled, varying, for example, in the shape and dimensions of at least one of the channel systems, the number and shape of heat exchange members, the materials, etc.

According to a preferred aspect of the present invention (claim 6), a stacking direction of the stack coincides with a normal direction of each of the plate shaped modules forming the stack. That is, the plate shaped modules are stacked like the pages of book, i. e. not edgewise.

According to a preferred aspect of the present invention (claim 7), the frame is a clamping device and comprises two frame means pressed towards each other and against the stack of plate shaped modules by at least two tie rods engaging with the hooks. That is the at least two tie rods act both in order to leak tightly pressing the modules together, and as holding and/or positioning means for maintaining the modules at their respective positions. Advantageously, the direction of the pressing force is parallel to the normal direction defined in claim 6.

According to a preferred aspect of the present invention (claim 8), the at least one module comprises a plurality of valves adapted to interrupt the flow of heat exchange fluid into and out of the at least one module. "At least one" here means that in each module, the flow of heat exchange fluid is adapted to be interrupted by valves. Thereby, heat exchange fluid is prevented from escaping while manipulating/changing the modules. Furthermore, the provision of the valves allows the process portions to be pre-filled and, therefore, quick usability and start-up after assemblage of the stack. The minor dead volume of the valves, if existing at all, can be tolerated by the medium sized structures of the channel systems. The valves are, for example, flat-shaped gate valves arranged at both sides of each of the modules and adapted to be operated by hand, for example, when connected to a stack. In addition to the heat exchange fluid channels, the process fluid channels may also be decoupled by interrupting the flow of process fluid into and out of the module, so that security regarding strict separation of heat exchange and process fluids is assured while manipulating/changing the modules.

According to a preferred aspect of the present invention (claim 9), each of the plurality of valves is a manually, pneumatically, hydraulically or electrically manipulatable valve. The choice of the type of valve is especially determined by the size of the reactor.

The present invention will become more apparent by the following detailed description of preferred embodiments with respect to the accompanied drawings. In the drawings, there are:
Fig. 1a a schematic perspective view of a reactor according to a first preferred embodiment of the present invention, and Fig. 1b a detail (valve) of Fig. 1 b;
Fig. 2 a schematic perspective view of a reactor according to a second preferred embodiment of the present invention;
Figs. 3a to 3d schematic views of various process fluid channel systems formed within process portions, and Fig. 3e a schematic view showing a superposition of a process fluid channel system of a process portion and a heat exchange fluid channel system of a heat exchange portion, according to a third preferred embodiment of the present invention;
Fig. 4a a schematic sectional view of a set of five non-connected modules of the double-sided type, to be connected to form a reactor according to a fourth embodiment of the present invention, and Fig. 4b a detail of Fig. 4b;
Fig. 4c a schematic sectional view of a set of five non-connected modules of the single-sided type, according to a fifth embodiment of the present invention, and Fig. 4d a detail of Fig. 4c; und
Fig. 5a a schematic cross-sectional view of a reactor being composed of a stack of modules of the single-sided type, and Fig. 5b a schematic cross-sectional view of a reactor being composed of a stack of modules of the double-sided type according to a sixth preferred embodiment of the present invention.

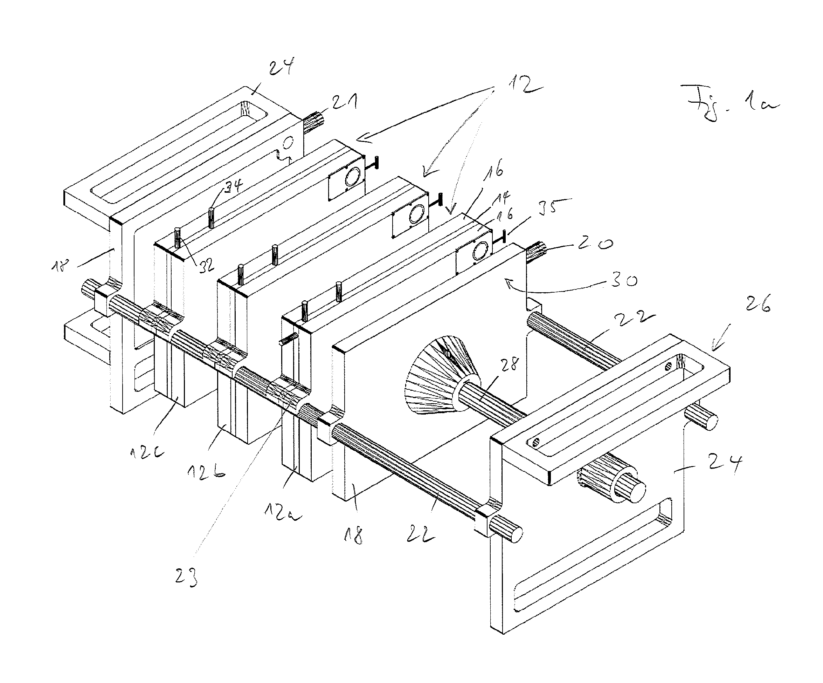

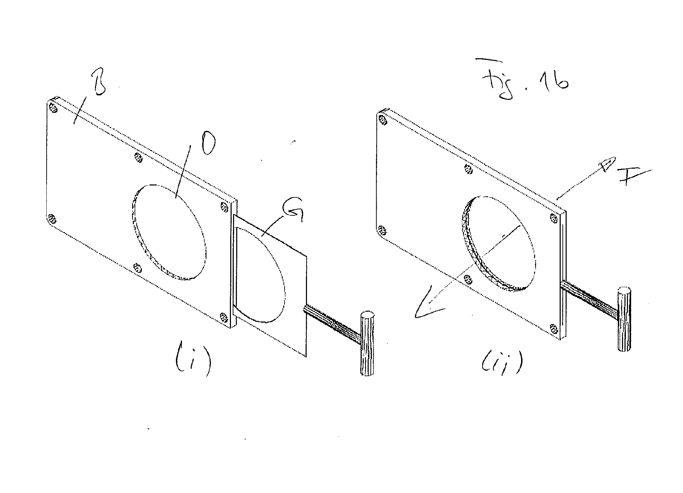

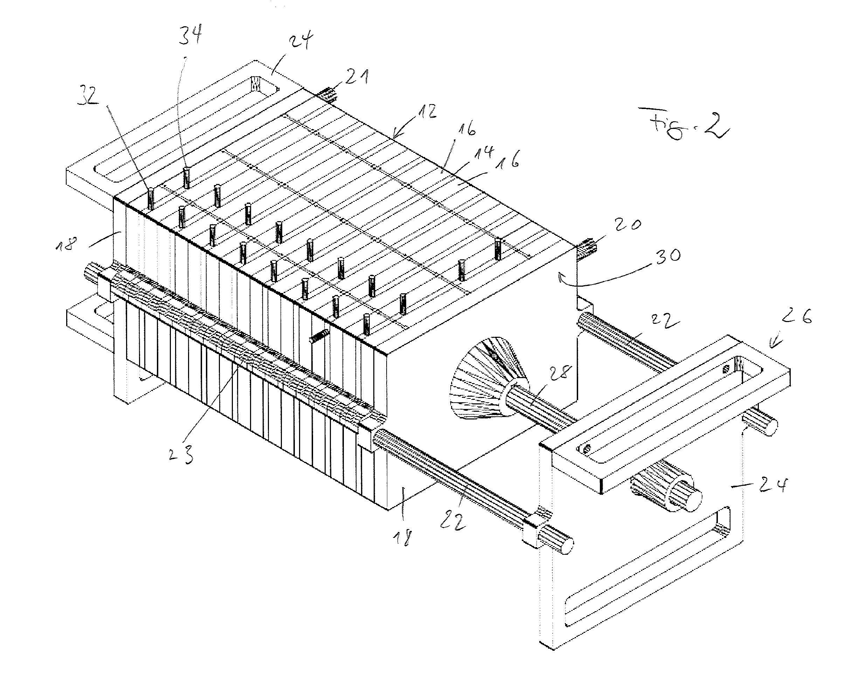

Fig. 1 a shows a schematic perspective view of a reactor 10 according to a first preferred embodiment of the present invention. The reactor 10 comprises three plate-shaped modules 12, each being integrally composed of a plate-shaped process portion 14 sandwiched between two equally plate-shaped heat exchange portions 16. In an operating condition of the reactor 10, the modules 12 are connected to form a fluid-tightly sealed stack of cuboid shape equivalent to the one shown in the embodiment of Fig. 2, which is a second preferred embodiment of the present invention comprised of eight modules 12. The stack formed by the three modules 12 in turn is sandwiched between two connecting and clamping portions 18 connected to an external heat exchange fluid source (not shown) via inlet and outlet ports 20 and 21, respectively. Each of the process and heat exchange portions 14, 16 is provided with two hook-shaped fasteners 23 symmetrically arranged on opposite sides thereof and adapted to be mounted to two tie-rods 22, as shown in Fig. 1 a. In contrast, as shown in Fig. 1a, the fasteners of the connecting and clamping portions 18 are ring shaped instead. The tie-rods 22 and two frame members 24 (also serving as handle bars for transportation and mounting of reactor 10) are constituent parts of a frame 26 keeping the modules 12 and the connecting and clamping portions 18 in a fluid-tight state by pressing them against each other by means of a pressing rod 28 acting at a central position of one (the right in Fig. 1) of the connecting and clamping portions 18. To this end, the tie-rods 22 are formed as thread-bars or have at least threads at each of their two end portions for nuts or the like (not shown) to be fastened thereto in order to apply an appropriate pressing force. The process portions 14 of the individual modules 12 include a mixing portion 12a, a first retention portion 12b, and a second retention portion 12c, respectively, connected in series by tubes (not shown), for example, outside the reactor at respective inlet ports 32 and outlet ports 34. The arrangement of the respective inlet ports 32 and outlet ports 34 may differ from the one shown in Fig. 1, and may specifically be different within a same reactor 10. Particularly, the arrangement may advantageously be adapted to the reactions taking place in the various process portions 14 of the reactor 10. Reactor 10 - due to the plate-shaped modules 12, connecting and clamping portions 18, and frame members 24 - forms, therefore, a "perpendicular structure" where the tie-rods 22 and the pressing rod 28 (and therefore the direction or a pressing force) extend in a direction perpendicular to main (largest) surfaces 30 of the plate-shaped modules 12 and connecting and clamping portions 18. The main surfaces 30 are, therefore, the surfaces extending perpendicular to a stacking direction of the stack of modules. Finally, each of the modules 12 comprise a set of gate valves 35 that are more clearly shown in Fig. 1b in a closed condition (i) and in an open condition (ii). In the closed condition (i), a plate shaped gate G is placed at an outside position with respect to a valve body B of the valve 35, closing thereby an opening O of the valve body B. In the open condition (ii), the plate shaped gate G is placed at an inside position with respect of the valve body B of the valve 35, allowing thereby the heat exchange fluid to flow in a flowing direction F through the valve 35.

In a mounted operating state of the reactor 10 - as described in more detail below - heat exchange fluid is coupled into the reactor 10 via the inlet port 20 and discharged, after flowing through each of the (heat exchange portions 16 of the) modules 12 arranged successively in a flowing direction, via the outlet port 21.

As stated above, Fig. 2 shows a schematic perspective view of a reactor 10 according to a second preferred embodiment of the present invention. Reactor 10 of this embodiment includes eight instead of three modules 12, where the modules 12 are shown in a connected state.

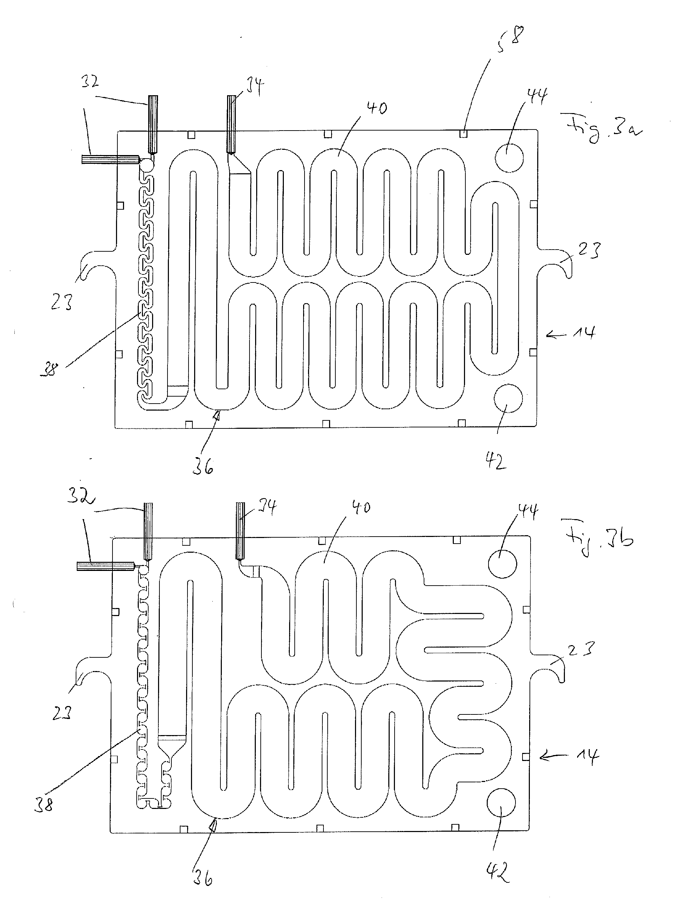

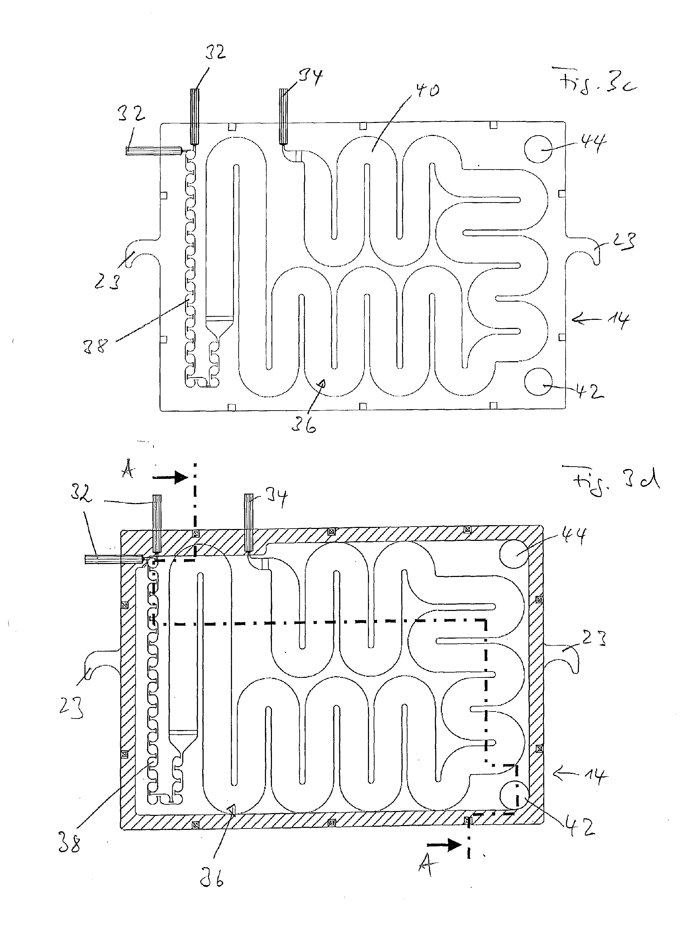

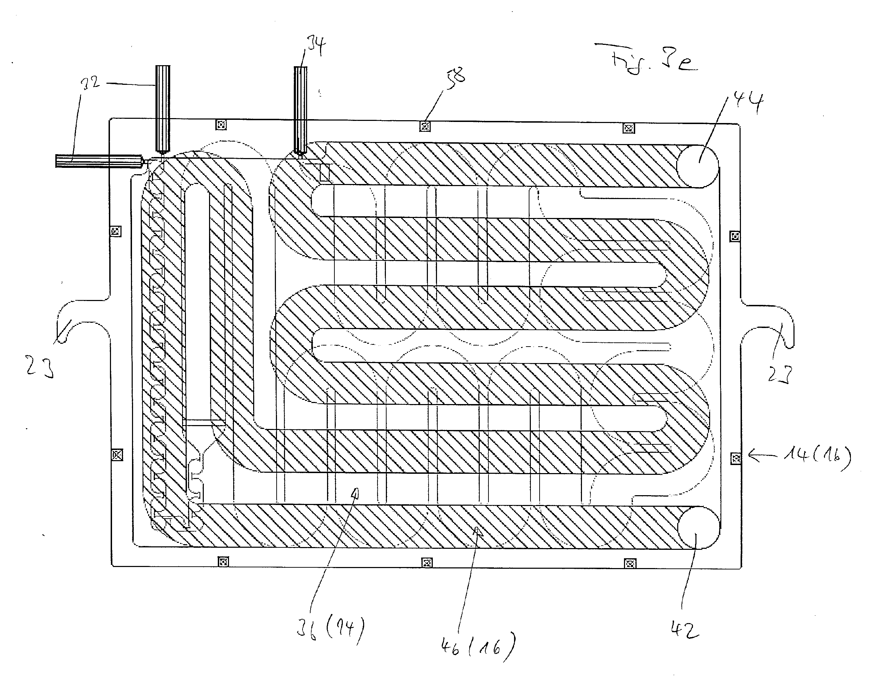

Figs. 3a to 3d show schematic views of various process fluid channel systems 36 formed within process portions 14 of the modules 12 according to a third preferred embodiment of the present invention. Each of the process fluid channel systems 36 shown comprises two inlet ports 32 for introducing process fluids (educts) to be mixed in order to react with each other in a subsequent meandering mixing section 38 and partly still in a subsequent meandering retention section 40 of larger flow cross-section, and guiding the process fluid (product fluid) to the outlet port 34. Furthermore, each process portion 14 has first and second heat exchange fluid passages 42, 44, the first heat exchange fluid passage 42 being connected to one of the two adjoining heat exchange portions 16, and the second heat exchange fluid passage 44 being connected to the other one of the two adjoining heat exchange portions 16. It should be noted that the adjoining heat exchange portions 14 would be arranged in front of and behind the respective process portions 14, so that the flow direction of the heat exchange fluid through the first and second heat fluid passages 42, 44 is perpendicular to the plane of projection of Figs. 3a - 3d (cf. Fig. 3e). It should further be noted that the process fluid channel system of Fig. 3a differs from the process fluid channel systems of Figs. 3b-3d. Each of the process plates 14 show ten fixation points 58 evenly distributed along the circumferential edge of the respective process plate 14.

Fig. 3e schematically shows in a superpositional arrangement both a heat exchange channel system 46 (hatched) with inlet and outlet ports 42, 44 formed by adjoining surfaces of the heat exchange portion 14 and the process portion 16, and the process fluid channel system 36 confined in the process portion 16. As evident from Fig. 3e, in order to optimize heat transfer between both channel systems 36, 46, their overlapping area is maximized.

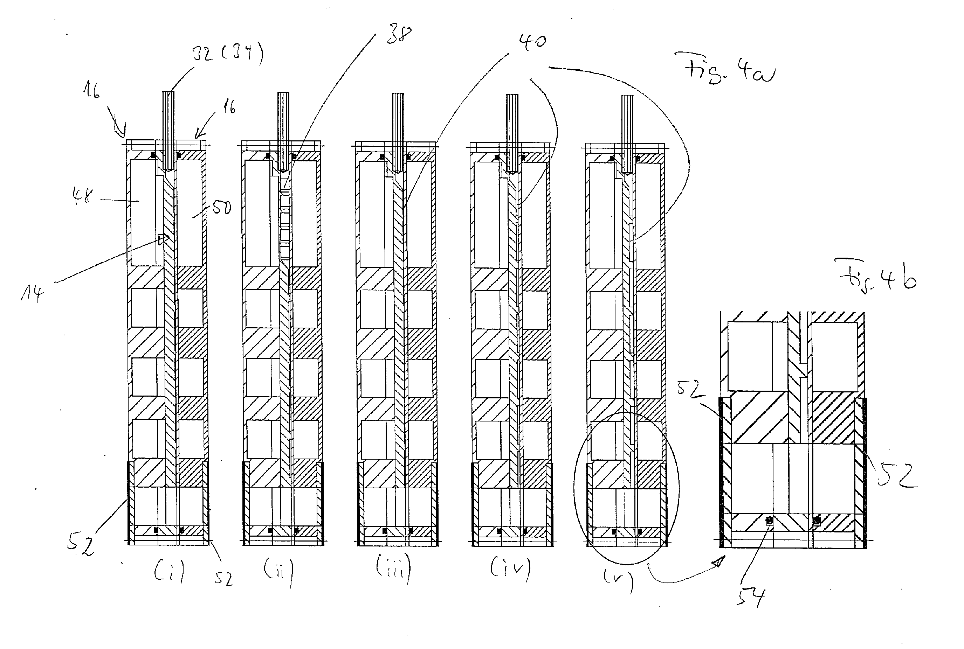

Fig. 4a shows a schematic sectional view along line A-A of Fig. 3d of a set of five non-connected modules (i) - (v) of the double-sided type to be connected to form a reactor, according to a fourth embodiment of the present invention. Module (ii), due to its having a process portion 14 including a mixing section 38, is a so called mixing module. Modules (i) and (iii)-(v), in contrast, due to the absence of such a mixing section, are called retention modules. Fig. 4b shows examplarily an enlarged lower portion of module (v).

The modules (i) - (v) each comprise a first heat exchange member 48 and a second heat exchange member 50, both heat exchange members 48, 50 forming the heat ex-0 change portion 16 and being arranged on opposite sides of the respective process plate 14 which is sandwiched therebetween. Each heat exchange member 48, 50 comprises a flat sealing 52 sealing the fluid connection (ports 42, 44) to the adjacent heat exchange member 48, 50. Fluid-tightness between the heat exchange members 48, 50 and the corresponding - i. e. sandwiched therebetween - process portion 14 is assured by O-rings 54, for example, arranged in a groove extending along an outer circumference of each of the respective heat exchange modules 48, 50. In Fig. 3d, the O-rings 54 are shown as hatched surface. Comparing the cross-sectional areas of the retention sections 40 of modules (iii) - (v), it is shown that the depths (and, therefore, the internal volume and, therefore, the residence time of the process fluid) thereof increase from module (iii) to module (v).

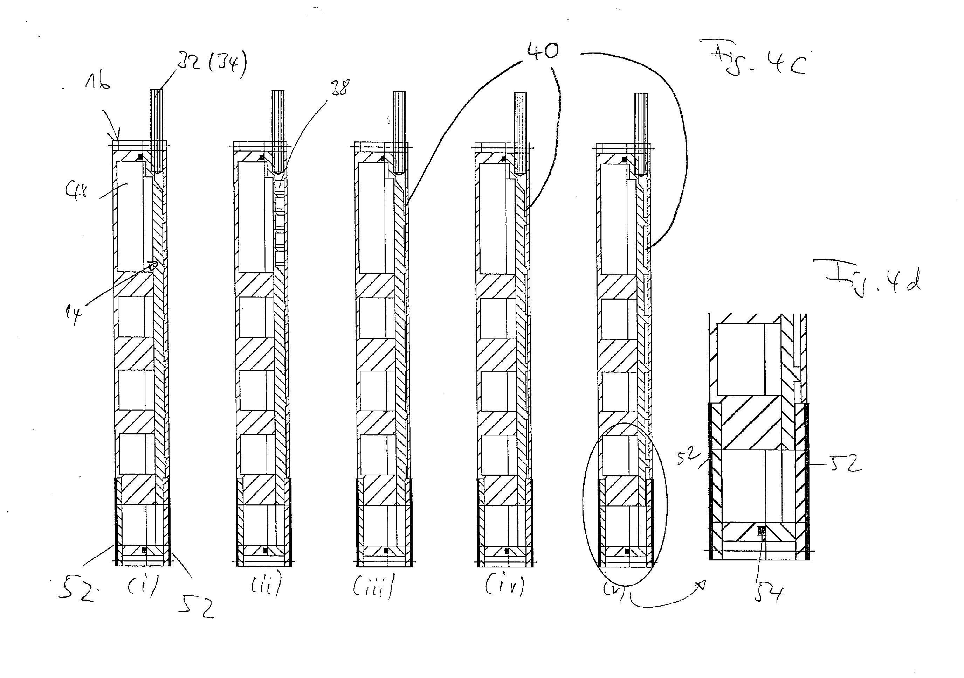

Figs. 4c and 4d correspond to Figs. 4a and 4b, respectively, and show a schematic sectional view along line B-B of Fig. 3d of a set of five non-connected modules (i) - (v) of the single-sided type to be connected to form a reactor, according to a fifth embodiment of the present invention. That is, the only difference with respect to the modules shown in Figs. 4a and 4b is that each module is of the single-sided type, where each of the heat exchange portions 16 comprises only the single heat exchange module 48.

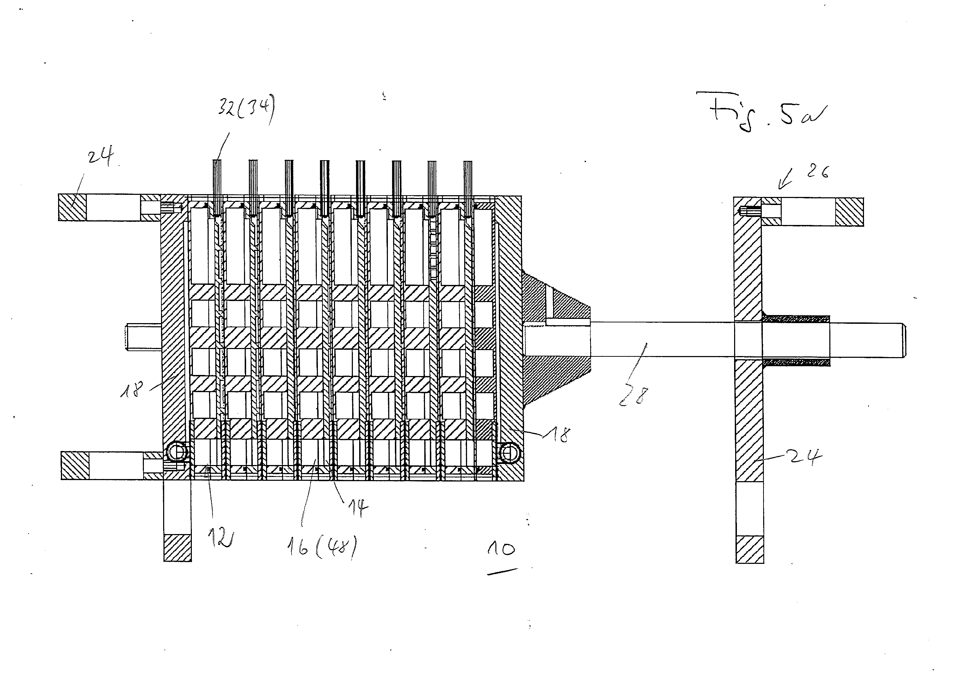

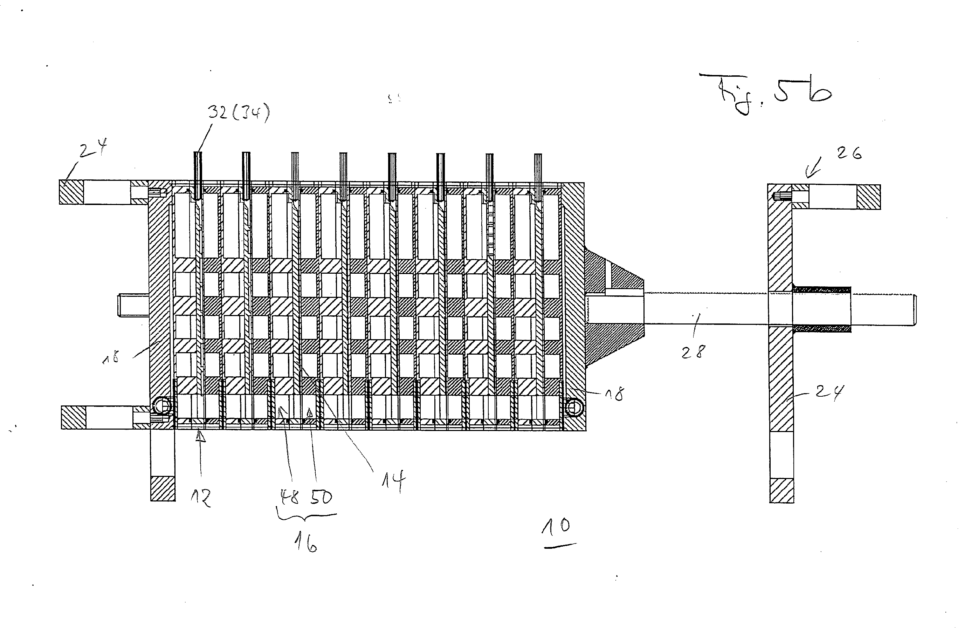

Fig. 5a shows a schematic cross-sectional view of a reactor being composed of a stack of modules of the single-sided type, and Fig. 5b a schematic cross-sectional view of a reactor being composed of a stack of modules of the double-sided type according to a sixth preferred embodiment of the present invention. That is, in Figs. 5a and 5b, the modules 10 of Figs. 4a/4b and 4c/4d are assembled to form the reactor 10. The reactor 10 of Fig. 5a (5b) comprises eight modules 12 fluidicly connected in series. In the lower left and right corners, there are shown the input and output ports 20, 21 for the heat exchange fluid flowing within the respective heat exchange portions 16 through all of the modules 10, to regulate the temperature of all of the process portions 14. That is, for the double-sided type, the process portions 14 and the heat exchange modules 48, 50 of the heat exchange portions 16 are stacked according to the following scheme: H₁₁-P₁-H₁₂-H₂₁-P₂-H₂₂-...-H₆₁-P₆-H₆₂, where Pₙ means the n^{th} process plate, and Hₙₘ means the m^{th} heat exchange module of the n^{th} process plate. That is, [Hₙ₁-Pₙ-Hₙ₂] specifies the n^{th} module 10.

### Reference Numerals

- 10: reactor
- 12: module
- 14: process portion
- 16: heat exchange portion
- 18: connecting heat exchange portion
- 20: inlet port
- 21: outlet port
- 22: tie-rod
- 23: fastener
- 24: frame member
- 26: frame
- 28: pressing rod
- 30: main surface
- 32: inlet port
- 34: outlet port
- 35: valves
- 36: process fluid channel system
- 38: mixing section
- 40: retention section
- 42: first heat exchange fluid passage
- 44: second heat exchange fluid passage
- 46: heat exchange channel system
- 48: first heat exchange module
- 50: second heat exchange module
- 52: flat sealing
- 54: O-ring sealing
- 56: valves
- 58: fixation points

## Claims

1. Reactor for carrying out chemical reactions to take place in at least one process fluid continuously flowing within said reactor between an inflow side and an outflow side thereof,
**characterized by**:
comprising at least one module as a smallest replaceable function unit that is integrally composed of (a) a process portion having confined therein one or more process fluid channels of a process fluid channel system, and (b) a heat exchange portion, wherein one or more heat exchange fluid channels of a heat exchange fluid channel system are fluid-tightly formed by opposite contact surfaces of said process portion and said heat exchange portion.

2. Reactor according to claim 1, **characterized in that** said contact surface of said process portion is a plane surface.

3. Reactor according to claim 1 or 2, **characterized in that** said heat exchange portion comprises either a single heat exchange member connected to a heat exchange surface of said process portion, or a first heat exchange member connected to a first heat exchange surface of said process portion, and a second heat exchange member connected to a second heat exchange surface of said process portion.

4. Reactor according to claim 3, **characterized in that** said process portion, said first heat exchange member and said second heat exchange member each are generally plate shaped, and that said first and second heat exchange surfaces of said process portion are opposite surfaces of said process portion.

5. Reactor according to any one of claims 1 to 4, **characterized by** a plurality of plate shaped modules fluid-tightly held together to form a stack by a frame, wherein each of said plurality of plate shaped modules is provided with at least one fastener to be detachably mountable to said frame.

6. Reactor according to claim 5, **characterized in that** a stacking direction of said stack coincides with a normal direction of each of said plate shaped modules forming said stack.

7. Reactor according to claim 5 or 6, **characterized in that** said frame is a clamping device and comprises two frame means pressed towards each other and against said stack of plate shaped modules by at least two tie rods engaging with said fasteners.

8. Reactor according to any one of claims 1 to 7, **characterized in that** said at least one module comprises a plurality of valves adapted to interrupt the flow of heat exchange fluid into and out of said at least one module.

9. Reactor according claim 8, **characterized in that** each of said plurality of valves is a manually, pneumatically, hydraulically or electrically manipulatable valve.

10. Reactor according to one of claim 1 to 9, **characterized in that** said process portion is made of a material resistant to said at least one process fluid and having high thermal conductivity.

11. Reactor according to one of claims 5 to 10, **characterized in that** each of said plurality of plate shaped modules comprises process fluid ports and heat exchange fluid ports arranged either at the same side or at different sides of said stack.

12. Reactor according to one of claims 1 to 11, **characterized in that** said reactor is a micro- or a mini-reactor.
